(19) Europäisches Patentamt
European Patent Office
Office européen des brevets

(11) EP 2 620 267 B1

(12) EUROPEAN PATENT SPECIFICATION

(45) Date of publication and mention of the grant of the patent:
**20.12.2017 Bulletin 2017/51**

(51) Int Cl.:
***B29C 45/76*** *(2006.01)* ***H02P 21/00*** *(2016.01)*
***H02P 29/024*** *(2016.01)*

(21) Application number: **13151832.6**

(22) Date of filing: **18.01.2013**

# (54) Injection molding machine and converter

Spritzgießmaschine und Umrichter

Machine de moulage par injection et convertisseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2012 JP 2012015267**

(43) Date of publication of application:
**31.07.2013 Bulletin 2013/31**

(73) Proprietor: **SUMITOMO HEAVY INDUSTRIES, LTD.**
**Tokyo 141-6025 (JP)**

(72) Inventor: **Mizuno, Hiroyuki**
**Kanagawa, 237-8555 (JP)**

(74) Representative: **Hoffmann Eitle**
**Patent- und Rechtsanwälte PartmbB**
**Arabellastraße 30**
**81925 München (DE)**

(56) References cited:
**EP-A2- 2 403 131**
**DE-A1-102010 000 991**
**JP-A- 2002 166 456**
**JP-A- 2010 110 936**
**US-B2- 6 850 426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 620 267 B1

## Description

BACKGROUND OF THE INVENTION

1. Field of the Invention

The present invention relates to an injection molding machine and a converter that include a bridge circuit that converts regenerated electric power supplied via a motor driving part into alternating current (AC) electric power.

2. Description of the Related Art

In JP 2002 166456 A there is described a horizontal molding machine. The horizontal molding machine is equipped with a horizontal operation part, an electromotor for driving the same, and a control circuit for controlling the speed of the operating part and a power failure detection circuit for detecting a power failure. The control circuit performs control making of the speed Vf zero corresponding to a power failure detection and the power supply circuit of the control circuit is equipped with a parallel circuit consisting of a small capacity electricity storage part and a large capacity electricity storage part and the electricity storage part performs charge late as compared with discharge. Assuming the horizontal type, remodeling is applied to the control circuit and the power supply circuit to keep brake control even at the time of power failure to dispense with or miniaturize a brake circuit.

In EP 2 403 131 A2 there is described an electric power conversion system and an electric power conversion device. The electric power conversion system includes a motor, an inverter circuit that outputs three-phase alternating currents to the motor, a current sensor that detects each of the three-phase alternating currents, and a control circuit that controls the inverter circuit based on a torque command value and values detected by the current sensor, so that the three-phase alternating currents outputted from the inverter circuit are formed as sine waves.

In JP 2010 110936 A there is described a method and device for displaying electric power of electric injection molding machine. The electric power display has a PWM converter which converts a three-phase AC voltage supplied from a three-phase AC source side into a DC voltage to supply to servo amplifiers, servo motors for driving a screw, a mold opening/closing device, and an ejector device. The regenerative electric power regenerated from the servo amplifiers by the PWM converter is returned to the three-phase AC power source side. The electric power data includes power consumption and the regenerative electric power of the electric injection molding machine is calculated and displayed from a voltage value and a current value between the three-phase AC power source side and the PWM converter. An electric energy is obtained by integrating the electric power data including a reactive electric power and a power factor.

In DE 10 2010 000 991 A1 there is described a method for detection of a phase cut in a machine operated at a current converter.

In US 6,850,426 B2 there is described synchronous and bi-directional variable frequency power conversion.

FIG. 1 is a diagram illustrating a conventional injection molding machine 100. The injection molding machine 100 includes an inverter part 140, a converter part 120, and a control part 160. The inverter part 140 converts the AC electric power regenerated by a motor 150 into direct current (DC) electric power, and supplies the DC electric power to a DC link 130. The converter part 120 converts the DC electric power supplied to the DC link 130 by the inverter part 140 into AC electric power, and feeds the AC electric power back to a power supply 110. The control part 160 controls the converter part 120.

The control part 160 controls the output voltage of the converter part 120 (that is, the DC link voltage Vdc of the DC link 130) so that the waveform of an AC electric current flowing from a bridge circuit 124 of the converter part 120 to the power supply 110 via a power supply line 125 and an LC filter 122 is a sine wave that is in synchronization with the supply voltage of the power supply 110. A voltage control part 163 generates the magnitude of a current caused to flow to the power supply 110 as an electric current command value Id, based on a deviation between the DC link voltage Vdc and a voltage command value Ucmd. A d-q transformation part 162 determines an in-phase component Idfb and a quadrature-phase component Iqfb with respect to the supply voltage of the power supply 110 by converting currents Iufb and Ivfb flowing through the power supply line 125 detected by an electric current sensor 123 into a two-phase rotating coordinate system that is in synchronization with the phase of the supply voltage of the power supply 110 (d-q transformation). An electric current control part 164 generates voltage command values Vd and Vq in accordance with the electric current command value Id and an electric current command value Iq and the detected components Idfb and Iqfb. A PWM signal generation part 165 controls the operation of the bridge circuit 124 in accordance with the voltage command values Vd and Vq. As a result, a current flowing to the power supply 110 is controlled, so that a desired DC link voltage Vdc is obtained.

For example, Japanese Laid-Open Patent Application No. 2006-54947 is known as disclosing a converter that feeds regenerated electric power back to a power supply.

However, when a power line that transmits AC electric power output from an AC electric power converting part is broken (for example, in the case of FIG. 1, when the power supply line 125 that transmits AC electric power output from the bridge circuit 124 is broken because of, for example, the blowout of a fuse 121), it is difficult to detect the breakage.

## SUMMARY OF THE INVENTION

Accordingly, it is an object of the present invention to provide an injection molding machine and a converter that facilitate detection of breakage of a power line that transmits AC electric power.

According to an aspect of the present invention, a converter includes the features of claim 1.

According to another aspect of the present invention, an injection molding machine includes the features of claim 11.

According to the present invention, it is possible to easily detect a breakage of an electric power line that transmits AC electric power.

The object and advantages of the embodiments will be realized and attained by means of the elements and combinations particularly pointed out in the claims.

It is to be understood that both the foregoing general description and the following detailed description are exemplary and explanatory and not restrictive of the invention.

## BRIEF DESCRIPTION OF THE DRAWINGS

Other objects, features and advantages of the present invention will become more apparent from the following detailed description when read in conjunction with the accompanying drawings, in which:

- FIG. 1 is a diagram illustrating a conventional injection molding machine;
- FIG. 2 is a diagram illustrating an injection molding machine according to a first embodiment of the present invention;
- FIG. 3 is a graph illustrating normal-time operating waveforms according to a simulation of the injection molding machine according to the first embodiment;
- FIG. 4 is a graph illustrating abnormal-time operating waveforms according to a simulation of the injection molding machine according to the first embodiment;
- FIG. 5 is a diagram illustrating a configuration of a breakage detection part according to the first embodiment;
- FIG. 6 is a graph illustrating operating waveforms according to a simulation of the injection molding machine having the breakage detection part according to the first embodiment;
- FIG. 7 is a diagram illustrating another configuration of the breakage detection part according to the first embodiment;
- FIG. 8 is a diagram illustrating another configuration of the breakage detection part according to the first embodiment;
- FIG. 9 is a diagram illustrating another configuration of the breakage detection part according to the first embodiment;
- FIG. 10 is a diagram illustrating another configuration of the breakage detection part according to the first embodiment; and
- FIG. 11 is a diagram illustrating an injection molding machine according to a second embodiment of the present invention.

## DETAILED DESCRIPTION OF THE PREFERRED EMBODIMENTS

A description is given below, with reference to the accompanying drawings, of embodiments of the present invention.

FIG. 2 is a diagram illustrating an electric injection molding machine 1 according to a first embodiment of the present invention. The injection molding machine 1 includes a motor 50, an inverter part 40, a DC link 30, a converter 70, and a host controller 90. Further, the converter 70 includes a converter part 20 and a control part 60.

The injection molding machine 1 has a function of supplying the motor 50 with electric power via the converter part 20, the DC link 30, and the inverter part 40 based on AC electric power supplied from a power supply 10. Further, the injection molding machine 1 has the function of feeding electric power regenerated by the motor 50 back to the power supply 10 via the inverter part 40, the DC link 30, and the converter part 20. The injection molding machine 1 saves energy with these functions. The power supply 10 is, for example, an AC power supply provided outside the injection molding machine 1, such as the AC power supply of plant facilities.

The motor 50 is used in the injection molding machine 1, and regenerates electric power at the time of its deceleration. Examples of the motor 50 include a servomotor for opening and closing molds. The servomotor for opening and closing molds is capable of opening and closing a movable platen by driving a mold clamping device. A mold closing process to close molds, a mold opening process to open molds, and a mold clamping process to clamp molds are performed by the opening and closing of the movable platen.

The motor 50 may be a motor for injection or a servomotor for an ejector. The servomotor for injection is capable of causing a screw inside a heating cylinder to move forward by its operation. An injection process to inject a molten material accumulated in front of the screw into a mold cavity is performed by the forward movement of the screw. The servomotor for an ejector is capable of causing an ejector shaft to move by its operation. With the movement of the ejector shaft, a molded article ejecting process to eject a molded article from molds is performed. The motor 50 may be multiple motors that are connected in parallel to each other.

The inverter part 40 is a driving part that converts DC electric power supplied from the converter part 20 via the DC link 30 into AC electric power and drives the motor 50 based on the AC electric power. For example, the inverter part 40 converts a DC electric current output from the converter part 20 and supplied via the DC link 30 into a three-phase AC electric current. Further, the inverter part 40 converts electric power regenerated by the motor 50 into DC regenerated electric power, and supplies the DC regenerated electric power to the DC link 30 and the converter part 20. For example, the inverter part 40 converts a three-phase AC electric current supplied from the motor 50 into a DC electric current. In the case of performing conversion bidirectionally between DC electric power and three-phase AC electric power, it is preferable that the inverter part 40 include, for example, a three-phase bridge circuit formed of six power transistors.

The DC link 30 is a DC power supply channel part provided between the DC output side of the converter part 20 and the DC input side of the inverter part 40. The DC link 30 includes a pair of DC power supply lines 31 and a smoothing capacitor 32. The DC power supply lines 31 are transmission channels of a DC electric current that flows among the converter part 20, the inverter part 40, and the smoothing capacitor 32. The smoothing capacitor 32 smoothes the DC voltage of the DC power supply lines 31. Examples of the smoothing capacitor 32 include an electrolytic capacitor. The DC link voltage Vdc of the DC link 30 corresponds to the voltage across the smoothing capacitor 32.

The converter part 20 is a regenerative converter that converts AC electric power supplied from the power supply 10 into DC electric power and supplies the DC electric power to the DC link 30 and the inverter part 40 while converting DC electric power supplied from the inverter part 40 and the DC link 30 into AC electric power and supplying the AC electric power to the power supply 10. The converter part 20 is a conversion part that converts DC regenerated electric power supplied via the inverter part 40 into AC electric power.

The converter part 20 includes a fuse 21, an LC filter 22, an electric current sensor 23, a bridge circuit 24, and a power supply line 25.

The fuse 21 is inserted in series in each of the U, V, and W phases in the power supply line 25. The fuse 21 blows out to prevent overcurrent from flowing through the power supply line 25.

The LC filter 22 is a circuit part that eliminates harmonic components of a current that flows through the power supply line 25. For example, the LC filter 22 has multiple reactors inserted in series in each of the U, V, and W phases and a capacitor connected between the multiple reactors in each of the U, V, and W phases. For example, the LC filter 22 has a Y connection configuration as illustrated in FIG. 2, where multiple capacitors having respective one ends connected to the corresponding phases are connected together at a neutral point. The LC filter 22 is not limited to the configuration illustrated in FIG. 2. For example, the LC filter 22 may have a Δ connection configuration where a capacitor is inserted between each two of the phases or a configuration where only a reactor is inserted in series in each phase.

The electric current sensor 23 is an electric current detection part that detects the electric current value of an AC electric current that flows through the power supply line 25. The electric current sensor 23 outputs phase electric currents that are detected in two of the three phases of the power supply line 25. For example, the electric current sensor 23 outputs detection signals that correspond to a U-phase electric current Iufb detected in the U phase and a V-phase electric current Ivfb detected in the V phase.

The bridge circuit 24 converts AC electric power that flows through the power supply line 25 into DC electric power and supplies the DC electric power to the DC link 30 while converting DC electric power supplied from the DC link 30 into AC electric power and supplying the AC electric power to the power supply line 25. For example, as illustrated in FIG. 2, the bridge circuit 24 includes a three-phase bridge circuit formed of six power transistors.

When the motor 50 performs a power running operation, the bridge circuit 24 rectifies an AC electric current that flows through the power supply line 25 to a DC electric current with diodes (not graphically illustrated) connected in parallel to the respective power transistors of the three-phase bridge circuit. During regeneration of electric power by the motor 50, the bridge circuit 24 performs a regenerative operation to turn ON or OFF the power transistors of the three-phase bridge circuit so that the DC electric current supplied from the DC link 30 is fed back to the power supply 10.

The power supply line 25 is an electric power line that connected the power supply 10 and the bridge circuit 24. The AC electric power supplied from the bridge circuit 24 is transmitted through the power supply line 25. The power supply line 25 includes, for example, electric current channels of three phases of U, V, and W.

Further, while the converter part 20 illustrated in FIG. 2 has a common channel that serves for both power running and regeneration, the converter part 20 may alternatively have a power running channel and a regeneration channel in parallel. For example, a diode bridge circuit that converts AC electric power flowing through the power supply line 25 into DC electric power is inserted in the power running channel, and a bridge circuit using semiconductor switches, such as the bridge circuit 24, that converts DC electric power supplied from the DC link 30 into AC electric power is inserted in the regeneration channel. In this case, a fuse is inserted in each of the power running channel and the regeneration channel.

The control part 60 is, for example, an arithmetic control circuit based on a microcomputer. The control part 60 includes, for example, a central processing unit (CPU), a secondary storage that contains a control program and the like, such as a read-only memory (ROM), a readable and writable primary storage that stores operation results and the like, such as a random access memory (RAM), a timer, a counter, an input interface, and an output interface.

The control part 60 controls the regenerative operation of the bridge circuit 24 of the converter part 20. The control part 60 performs control to feed back the regenerated electric power of the motor 50 input to the bridge circuit 24 via the inverter part 40 and the DC link 30 to the power supply 10 by, for example, performing pulse width modulation (PWM) control on the bridge circuit 24 with PWM signals generated by a PWM signal generation part 65.

The control part 60 controls the output voltage of the converter part 20 (that is, the DC link voltage Vdc of the DC link 30) by causing the bridge circuit 24 to perform a regenerative operation so that the waveform of an AC electric current flowing from the bridge circuit 24 to the power supply 10 via the power supply line 25 is a sine wave that is in synchronization with the phase of the AC supply voltage of the power supply 10.

The control part 60 includes a d-q transformation part 62, a voltage control part 63, an electric current control part 64, a voltage phase detection part 61, and the PWM signal generation part 65 as means for causing the bridge circuit 24 to perform a regenerative operation.

By performing a d-q transformation on the U-phase electric current Iufb and the V-phase electric current Ivfb detected by the electric current sensor 23, the d-q transformation part 62 outputs a d-axis electric current component Idfb and a q-axis electric current component Iqfb, which are the results of the d-q transformation.

Based on the error between a predetermined voltage command value Ucmd and the DC link voltage Vdc detected in the DC link 30, the voltage control part 63 generates an electric current command value Id for the d-axis electric current component Idfb for reducing the error to zero. The voltage command value Ucmd may be, for example, either a signal provided from the host controller 90 or a signal generated by the control part 60.

The electric current control part 64 generates a d-axis component voltage command value Vd based on the d-axis electric current component Idfb provided from the d-q transformation part 62 and the electric current command value Id provided from the voltage control part 63. Further, the electric current control part 64 generates a q-axis component voltage command value Vq based on the q-axis electric current component Iqfb provided from the d-q transformation part 62 and an electric current command value Iq for the q-axis electric current component Iqfb. The electric current command value Iq is set to zero (Iq = 0) so that the power factor of the power supply line 25 is adjusted to 1 (that is, the waveform of an AC electric current flowing through the power supply line 25 is adjusted to a sine wave that is in phase with the AC supply voltage of the power supply 10.

The voltage phase detection part 61 detects the phase of the AC voltage of each of the phases of the power supply line 25 by detecting the AC voltage of each of the phases.

The PWM signal generation part 65 generates PWM drive signals that drive the gates of transistors in the bridge circuit 24 to cause the bridge circuit 24 to perform a regenerative operation, based on the voltage phases detected by the voltage phase detection part 61 and the d-axis component voltage command value Vd and the q-axis component voltage command value Vq provided from the electric current control part 64.

FIG. 3 is a graph illustrating normal-time operating waveforms according to a simulation of the injection molding machine 1. In FIG. 3, Vr is the AC voltage of the power supply line 25 detected with reference to ground by the voltage phase detection part 61, Ir is an AC electric current flowing through the power supply line 25 detected by the current sensor 23, Vdc is the DC link voltage of the DC link 30, Idfb is the d-axis electric current component obtained as a result of the d-q transformation performed on the AC electric current Ir by the d-q transformation part 62, and Iqfb is the q-axis electric current component obtained as a result of the d-q transformation performed on the AC electric current Ir by the d-q transformation part 62.

The operation of the converter 70 starts at Time t1 when the DC link voltage Vdc has exceeded a predetermined threshold voltage Vth1 (Servo ON). When the operation of the converter 70 starts, the smoothing capacitor 32 is discharged by the regenerative operation of the bridge circuit 24 of the converter part 20, so that the DC link voltage Vdc gradually decreases. The d-axis electric current component Idfb is controlled to a regenerative electric current corresponding to the DC link voltage Vdc by the control part 60. The q-axis electric current component Iqfb is controlled to zero because the electric current command value Iq for the q-axis electric current component Iqfb is fixed at zero. The operation of the converter 70 stops at Time t2 when the DC link voltage Vdc has fallen below a predetermined threshold voltage Vth2 (Servo OFF). When the operation of the converter 70 stops, the regenerative operation of the bridge circuit 24 of the converter part 20 stops.

FIG. 4 is a graph illustrating abnormal-time operating waveforms according to a simulation of the injection molding machine 1. FIG. 4 illustrates a case where the breakage of the W phase of the power supply line 25 occurs at Time t3 during the discharge of the smoothing capacitor 32 due to the regenerative operation of the bridge circuit 24. As illustrated in FIG. 4, the breakage of any of the power supply lines of the phases of the power supply line 25 causes the electric current values of the d-axis electric current component Idfb and the q-axis electric current component Iqfb, which are the result of a d-q transformation performed by the d-q transformation part 62, to vary greatly relative to their normal-time steady states.

Accordingly, the result of a d-q transformation, which is used to control the regenerative operation of the bridge circuit 24, may be used to detect a breakage of the power supply line 25. Since the result of a d-q transformation may be used both to control the regenerative operation of the bridge circuit 24 and to detect a breakage of the power supply line 25, it is possible to detect a breakage of the power supply line 25 with a simple configuration.

In FIG. 2, the control part 60 detects a breakage of the power supply line 25 based on the result of a d-q transformation performed by the d-q transformation part 62. For example, the control part 60 detects a breakage of the power supply line 25 based on the magnitude of a change in an electric current component after the d-q transformation.

As a breakage detection part that detects a breakage of the power supply line 25 based on the result of a d-q transformation performed by the d-q transformation part 62, the control part 60 includes, for example, a signal processing part 66 and an abnormality determination part 67 as illustrated in FIG. 2.

The signal processing part 66 performs a predetermined filter operation on the result of a d-q transformation obtained by the d-q transformation part 62, thereby generating data y that is equivalent to the magnitude of the electric current component of the result of the d-q transformation. The abnormality determination part 67 determines the presence or absence of a breakage of the power supply line 25 by comparing the data y with a predetermined abnormality determination threshold Vth. For example, the abnormality determination part 67 determines the occurrence of a breakage in the power supply line 25 in response to the data y exceeding the abnormality determination threshold Vth, and outputs a breakage detection signal indicating detection of a breakage of the power supply line 25 to the host controller 90.

The host controller 90 stops an AC electric current from flowing through the power supply line 25 based on the breakage detection signal. For example, like the control part 60, the host controller 90 is an arithmetic control circuit based on a microcomputer. The host controller 90 includes, for example, a central processing unit (CPU), a secondary storage that contains a control program and the like, such as a ROM, a readable and writable primary storage that stores operation results and the like, such as a RAM, a timer, a counter, an input interface, and an output interface.

For example, in the case of receiving the breakage detection signal that indicates detection of a breakage of the power supply line 25, the host controller 90 issues a Servo OFF command for stopping the operation of the injection molding machine 1 to stop the operation of the converter 70 and stop the operation of the bridge circuit 24 of the converter part 20. As a result, the regenerative operation of the bridge circuit 24 of the converter part 20 stops, so that it is possible to stop an AC electric current from flowing through the power supply line 25. Consequently, it is possible to prevent overcurrent from flowing through the power supply line 25.

Further, in the case of receiving the breakage detection signal that indicates detection of a breakage of the power supply line 25, the host controller 90 may notify an operator of the injection molding machine 1 of the occurrence of a breakage in the power supply line 25. This makes it possible to immediately notify the operator of a breakage abnormality.

FIG. 5 illustrates a first example (embodiment) of the signal processing part 66 of the breakage detection part. The signal processing part 66 includes an absolute value circuit 71 and a first-order lag filter 72. The first-order lag filter 72 employs $\frac{aZ}{Z-a}$, where Z expresses Laplace transform and a is a predetermined constant. The absolute value circuit 71 obtains (outputs) the absolute value of the q-axis electric current component Iqfb. The first-order lag filter 72 outputs the value y, which is obtained as a result of performing a first-order lag operation on the absolute value of the q-axis electric current component Iqfb. The first-order lag filter 72 may be replaced with a timer in terms of detecting a large electric current of a predetermined value or more flowing through the power supply line 25 for a certain period of time.

FIG. 6 is a graph illustrating abnormal-time operating waveforms according to a simulation of the injection molding machine 1 in the case of detecting a breakage with the configuration of FIG. 5. Like FIG. 4, FIG. 6 illustrates a case where the breakage of the W phase of the power supply line 25 occurs at Time t5 during the discharge of the smoothing capacitor 32 due to the regenerative operation of the bridge circuit 24. As illustrated in FIG. 6, the abnormality determination part 67 outputs an abnormality flag as a breakage abnormality detection signal at Time t6 immediately after the occurrence of a breakage, when |Iqfb| output from the signal processing part 66 has exceeded a predetermined threshold. The host controller 90 stops the converter 70, so that the regenerative operation of the bridge circuit 24 of the converter part 20 stops (Ir has converged on zero).

FIG. 7 illustrates a second example (embodiment) of the signal processing part 66. The signal processing circuit 66 includes a root mean square value circuit 73 and the first-order lag filter 72. As illustrated in FIG. 7, the signal processing part 66 may replace the absolute value circuit 71 of FIG. 5 with the root mean square value circuit 73 that outputs the root mean square value (effective value) of the q-axis electric current component Iqfb. The first-order lag filter 74 outputs the value y, which is obtained as a result of performing a first-order lag operation on the root mean square value of the q-axis electric current component Iqfb.

FIG. 8 illustrates a third example (embodiment) of the signal processing circuit 66. The signal processing circuit 66 includes the absolute value circuit 71 and a moving average filter (average) 76. As illustrated in FIG. 8, the signal processing part 66 may replace the first-order lag circuit 72 of FIG. 5 with the moving average filter 76 that outputs the value y, which is the moving average of the absolute value of the q-axis electric current component Iqfb output from the absolute value circuit 71.

FIG. 9 illustrates a fourth example (embodiment) of the signal processing part 66. The signal processing part 66 includes a high-pass filter (HPF) 77 to which the d-axis electric current component Idfb is input in addition to the absolute value circuit 71 and the first-order lag filter 72. As a result, the DC component of the d-axis electric current component Idfb is eliminated. That is, by extracting the values of the d-axis electric current component Idfb between Time t3 and Time t4 of FIG. 4, it is possible to treat the d-axis electric current component Idfb as the q-axis electric current component Iqfb the same as in the case of FIG. 5. The absolute value circuit 71 obtains (outputs) the absolute value of the output of the high-pass filter 77. The first-order lag filter 72 outputs the value y, which is obtained as a result of performing a first-order lag operation on the absolute value of the output of the high-pass filter 77.

FIG. 10 illustrates a fifth example (embodiment) of the signal processing part 66. The signal processing part 66 includes a subtraction part 80 that outputs a deviation between the d-axis electric current component Idfb and its command value Id in addition to the absolute value circuit 71 and the first-order lag filter 72. Calculating such a deviation makes it possible to extract values equivalent to the values of the d-axis electric current component Idfb between Time t3 and Time t4 of FIG. 4 even when the command value Id changes to any value. Accordingly, it is possible to treat the d-axis electric current component Idfb as the q-axis electric current component Iqfb the same as in the case of FIG. 5. The absolute value circuit 71 obtains (outputs) the absolute value of the deviation output from the subtraction part 80. The first-order lag filter 72 outputs the value y, which is obtained as a result of performing a first-order lag operation on the absolute value of the deviation output from the subtraction part 80.

FIG. 11 is a diagram illustrating an electric injection molding machine 2 according to a second embodiment of the present invention. A description of the same configurations and effects as those of the injection molding machine 1 of the first embodiment (FIG. 2) is omitted. The control part 60 of the injection molding machine 2 includes a broken phase determination part 68 as means for detecting a broken phase (a phase in which a breakage has occurred) by comparing the electric currents of phases of the power supply line 25 detected by the electric current sensor 23.

The broken phase determination part 68 determines a power supply line for which the electric current value of a phase electric current detected by the electric current sensor 23 is zero as a broken power supply line. If a power supply line for which the electric current value of a phase electric current detected by the electric current sensor 23 is zero is not detected, and the occurrence of a breakage is detected based on the data y from the signal processing part 66, the broken phase determination part 68 determines that a power supply line whose phase electric current is not directly detected by the electric current sensor 23 has been broken.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority or inferiority of the invention. Although one or more embodiments of the present invention have been described in detail, it should be understood that the various changes, substitutions, and alterations could be made hereto without departing from the scope of the invention.

For example, the breakage detection part may detect a breakage of the power supply line 25 by combining a change in the d-axis electric current component Idfb and a change in the q-axis electric current component Iqfb. This makes it possible to increase the accuracy of breakage detection.

Further, while a case is illustrated above where the control part 60 detects a breakage of the power supply line 25 based on the magnitude of a change in an electric current component after a d-q transformation, the control part 60 may also detect a breakage of the power supply line 25 based on a change in the frequency of an electric current component after a d-q transformation or based on a change in the inclination of an electric current component after a d-q transformation.

The motor is not limited to the kinds described above, and embodiments of the present invention may be applied to other kinds of motors as long as the motors are used in injection molding machines.

## Claims

**1.** A converter (70), comprising:

a conversion part (20) configured to convert regenerated electric power supplied via a driving part (40) of a motor (50) into alternating current electric power, and supply the alternating current electric power to a power supply (10) via an electric power line (25); **characterized in that** the converter comprises a breakage detection part (66, 67) configured to detect a breakage of the electric power line (25) transmitting the alternating current electric power based on a result of a d-q transformation of an alternating electric current flowing through the electric power line.

**2.** The converter as claimed in claim 1, wherein the breakage detection part (66, 67) is configured to detect the breakage of the electric power line (25) based on a change in an electric current component of the alternating electric current after the d-q transformation.

**3.** The converter as claimed in claim 2, wherein the breakage detection part (66, 67) is configured to detect the breakage of the electric power line (25) by detecting a change in a magnitude of the electric current component of the alternating electric current after the d-q transformation.

**4.** The converter as claimed in any of claims 1 to 3, wherein the breakage detection part (66, 67) is configured to detect the breakage of the electric power line (25) by comparing the result of the d-q transformation and a predetermined value.

**5.** The converter as claimed in any of claims 1 to 4, wherein the result of the d-q transformation is a q-axis electric current component.

**6.** The converter as claimed in claim 5, wherein the breakage detection part (66, 67) is configured to detect the breakage of the electric power line (25) based on an output of a filter (72) to which the q-axis electric current component is input.

**7.** The converter as claimed in any of claims 1 to 6, wherein the result of the d-q transformation is a d-axis electric current component.

**8.** The converter as claimed in claim 7, wherein the breakage detection part (66, 67) is configured to detect the breakage of the electric power line (25) based on an output of a filter (72) to which the d-axis electric current component is input.

**9.** The converter as claimed in claim 7 or 8, wherein the breakage detection part (66, 67) is configured to detect the breakage of the electric power line (25) based on a deviation between the d-axis electric current component and a command value for the d-axis electric current component.

**10.** The converter as claimed in any of claims 1 to 9, wherein the breakage detection part (66, 67) is configured to detect a phase in which the breakage has occurred among a plurality of phases of the electric power line (25) by comparing electric currents of the phases.

**11.** An injection molding machine (1, 2), comprising:

a motor (50);
a driving part (40) configured to drive the motor;
***characterized by***
a converter according to one of the claims 1 to 10.

**12.** The injection molding machine as claimed in claim 11, further comprising:

means (90) for stopping the alternating electric current from flowing through the electric power line in response to detecting the breakage of the electric power line.

**Patentansprüche**

**1.** Wandler (70), umfassend:

einen Wandlungsteil (20), der konfiguriert ist, regenerierte elektrische Energie, die über einen Antriebsteil (40) eines Motors (50) geliefert wird, in elektrische Wechselstromenergie umzuwandeln und die elektrische Wechselstromenergie über eine Starkstromleitung (25) an eine Energieversorgung (10) zu liefern;
**dadurch gekennzeichnet, dass** der Wandler umfasst
einen Bruchdetektionsteil (66, 67) der konfiguriert ist, einen Bruch der Starkstromleitung (25), die die elektrische Wechselstromenergie überträgt, basierend auf einem Ergebnis einer d-q-Transformation eines elektrischen Wechselstroms, der durch die Starkstromleitung fließt, zu detektieren.

**2.** Wandler nach Anspruch 1, wobei der Bruchdetektionsteil (66, 67) konfiguriert ist, den Bruch der Starkstromleitung (25) basierend auf einer Veränderung in einer Komponente elektrischen Stroms des elektrischen Wechselstroms nach der d-q-Transformation zu detektieren.

**3.** Wandler nach Anspruch 2, wobei der Bruchdetektionsteil (66, 67) konfiguriert ist, den Bruch der Starkstromleitung (25) durch Detektieren einer Veränderung in einer Größenordnung der Komponente elektrischen Stroms des elektrischen Wechselstroms nach der d-q-Transformation zu detektieren.

**4.** Wandler nach einem der Ansprüche 1 bis 3, wobei der Bruchdetektionsteil (66, 67) konfiguriert ist, den Bruch der Starkstromleitung (25) durch Vergleichen des Ergebnisses der d-q-Transformation und eines vorbestimmten Wertes zu detektieren.

**5.** Wandler nach einem der Ansprüche 1 bis 4, wobei das Ergebnis der d-q-Transformation eine Komponente elektrischen Stroms der q-Achse ist.

**6.** Wandler nach Anspruch 5, wobei der Bruchdetektionsteil (66, 67) konfiguriert ist, den Bruch der Starkstromleitung (25) basierend auf einer Ausgabe eines Filters (72), in den die Komponente elektrischen Stroms der q-Achse eingegeben wird, zu detektieren.

**7.** Wandler nach einem der Ansprüche 1 bis 6, wobei das Ergebnis der d-q-Transformation eine Komponente elektrischen Stroms der d-Achse ist.

**8.** Wandler nach Anspruch 7, wobei der Bruchdetektionsteil (66, 67) konfiguriert ist, den Bruch der Starkstromleitung (25) basierend auf einer Ausgabe eines Filters (72), in den die Komponente elektrischen Stroms der d-Achse eingegeben wird, zu detektieren.

**9.** Wandler nach Anspruch 7 oder 8, wobei der Bruchdetektionsteil (66, 67) konfiguriert ist, den Bruch der Starkstromleitung (25) basierend auf einer Abweichung zwischen der Komponente elektrischen Stroms der d-Achse und einem Sollwert für die Komponente elektrischen Stroms der d-Achse zu detektieren.

**10.** Wandler nach einem der Ansprüche 1 bis 9, wobei der Bruchdetektionsteil (66, 67) konfiguriert ist, unter einer Mehrzahl von Phasen der Starkstromleitung (25) durch Vergleichen von elektrischen Strömen der Phasen eine Phase zu detektieren, in der der Bruch stattgefunden hat.

**11.** Spritzgussmaschine (1, 2), umfassend:

einen Motor (50);
einen Antriebsteil (40), der konfiguriert ist, den Motor anzutreiben;
**gekennzeichnet durch**
einen Wandler nach einem der Ansprüche 1 bis 10.

**12.** Spritzgussmaschine nach Anspruch 11, weiter umfassend:

Mittel (90) zum Stoppen eines Fließens des elektrischen Wechselstroms durch die Starkstromleitung, als Reaktion auf ein Detektieren des Bruchs der Starkstromleitung.

## Revendications

**1.** Convertisseur (70), comprenant :

une partie de conversion (20) configurée pour convertir de la puissance électrique régénérée fournie via une partie de pilotage (40) d'un moteur (50) en puissance électrique de courant alternatif, et fournir la puissance électrique de courant alternatif à une alimentation électrique (10) via une ligne d'alimentation électrique (25) ;
**caractérisé en ce que** le convertisseur comprend
une partie de détection de rupture (66, 67) configurée pour détecter une rupture de la ligne d'alimentation électrique (25) transmettant la puissance électrique de courant alternatif sur la base d'un résultat d'une transformation d-q d'un courant électrique alternatif circulant à travers la ligne d'alimentation électrique.

**2.** Convertisseur selon la revendication 1, dans lequel la partie de détection de rupture (66, 67) est configurée pour détecter la rupture de la ligne d'alimentation électrique (25) sur la base d'un changement dans une composante de courant électrique du courant électrique alternatif après la transformation d-q.

**3.** Convertisseur selon la revendication 2, dans lequel la partie de détection de rupture (66, 67) est configurée pour détecter la rupture de la ligne d'alimentation électrique (25) en détectant un changement dans une grandeur de la composante de courant électrique du courant électrique alternatif après la transformation d-q.

**4.** Convertisseur selon l'une quelconque des revendications 1 à 3, dans lequel la partie de détection de rupture (66, 67) est configurée pour détecter la rupture de la ligne d'alimentation électrique (25) en comparant le résultat de la transformation d-q et une valeur prédéterminée.

**5.** Convertisseur selon l'une quelconque des revendications 1 à 4, dans lequel le résultat de la transformation d-q est une composante de courant électrique selon l'axe q.

**6.** Convertisseur selon la revendication 5, dans lequel la partie de détection de rupture (66, 67) est configurée pour détecter la rupture de la ligne d'alimentation électrique (25) sur la base d'une sortie d'un filtre (72) pour lequel la composante de courant électrique selon l'axe q est une entrée.

**7.** Convertisseur selon l'une quelconque des revendications 1 à 6, dans lequel le résultat de la transformation d-q est une composante de courant électrique selon l'axe d.

**8.** Convertisseur selon la revendication 7, dans lequel la partie de détection de rupture (66, 67) est configurée pour détecter la rupture de la ligne d'alimentation électrique (25) sur la base d'une sortie d'un filtre (72) pour lequel la composante de courant électrique selon l'axe d est une entrée.

**9.** Convertisseur selon la revendication 7 ou 8, dans lequel la partie de détection de rupture (66, 67) est configurée pour détecter la rupture de la ligne d'alimentation électrique (25) sur la base d'un écart entre la composante de courant électrique selon l'axe d et une valeur de commande pour la composante de courant électrique selon l'axe d.

**10.** Convertisseur selon l'une quelconque des revendications 1 à 9, dans lequel la partie de détection de rupture (66, 67) est configurée pour détecter une phase dans laquelle la rupture s'est produite parmi une pluralité de phases de la ligne d'alimentation électrique (25) en comparant des courants électriques des phases.

**11.** Presse à mouler par injection (1, 2), comprenant :

un moteur (50) ;
une partie de pilotage (40) configurée pour piloter le moteur;
***caractérisé par***
un convertisseur selon l'une des revendications 1 à 10.

**12.** Presse à mouler par injection selon la revendication 11, comprenant en outre :

des moyens (90) pour arrêter la circulation du courant électrique alternatif à travers la ligne d'alimentation électrique en réponse à la détection de la rupture de la ligne d'alimentation électrique.

FIG.1

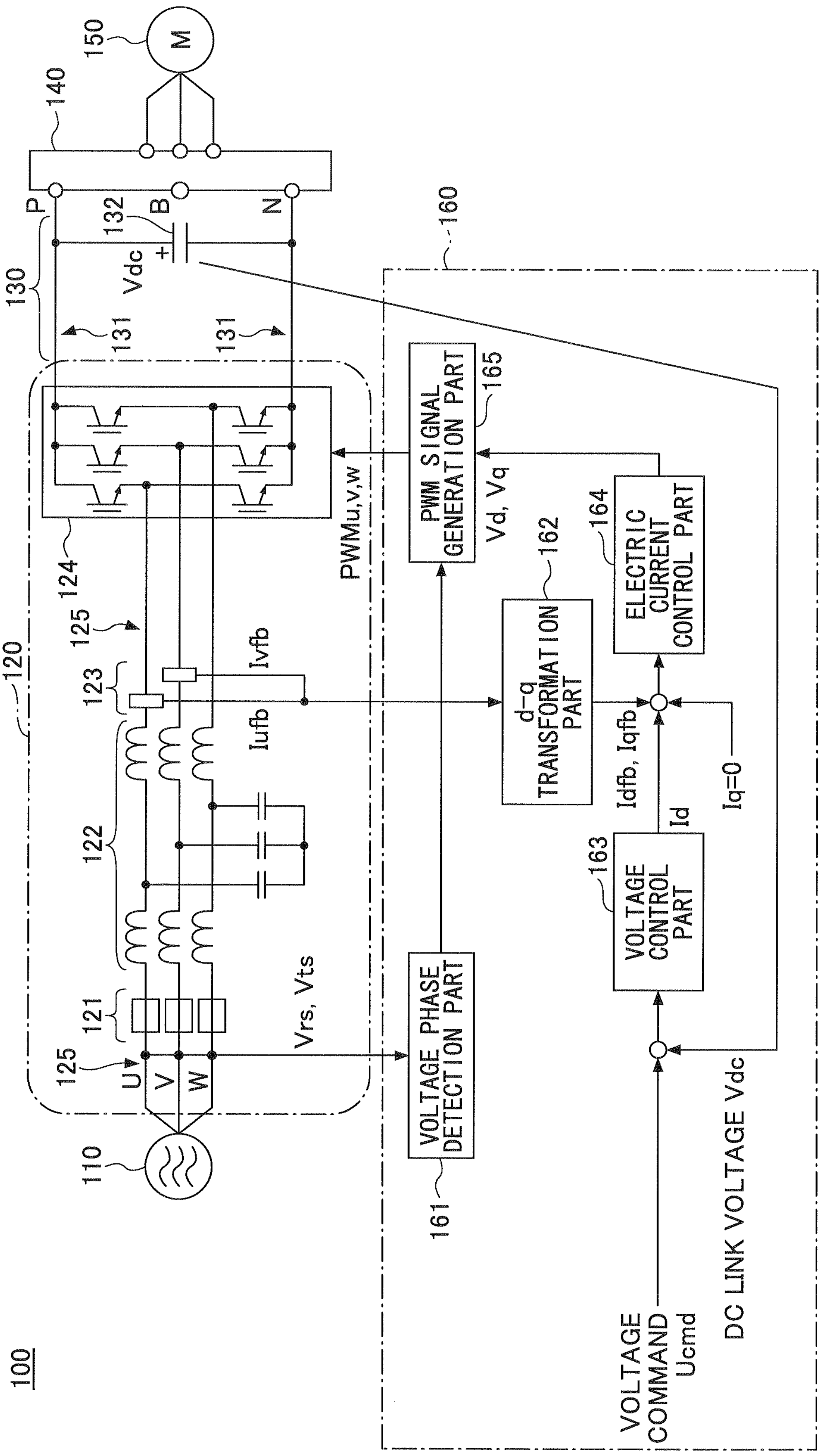
100
110
120
121
122
123
124
125
125
130
131
131
132
140
150
M
P
B
N
Vdc
+
U
V
W
Vrs, Vts
Iufb
Ivfb
PWMu,v,w
160
VOLTAGE PHASE DETECTION PART
161
PWM SIGNAL GENERATION PART
165
d-q TRANSFORMATION PART
162
VOLTAGE CONTROL PART
163
ELECTRIC CURRENT CONTROL PART
164
Vd, Vq
Idfb, Iqfb
Id
Iq=0
VOLTAGE COMMAND Ucmd
DC LINK VOLTAGE Vdc

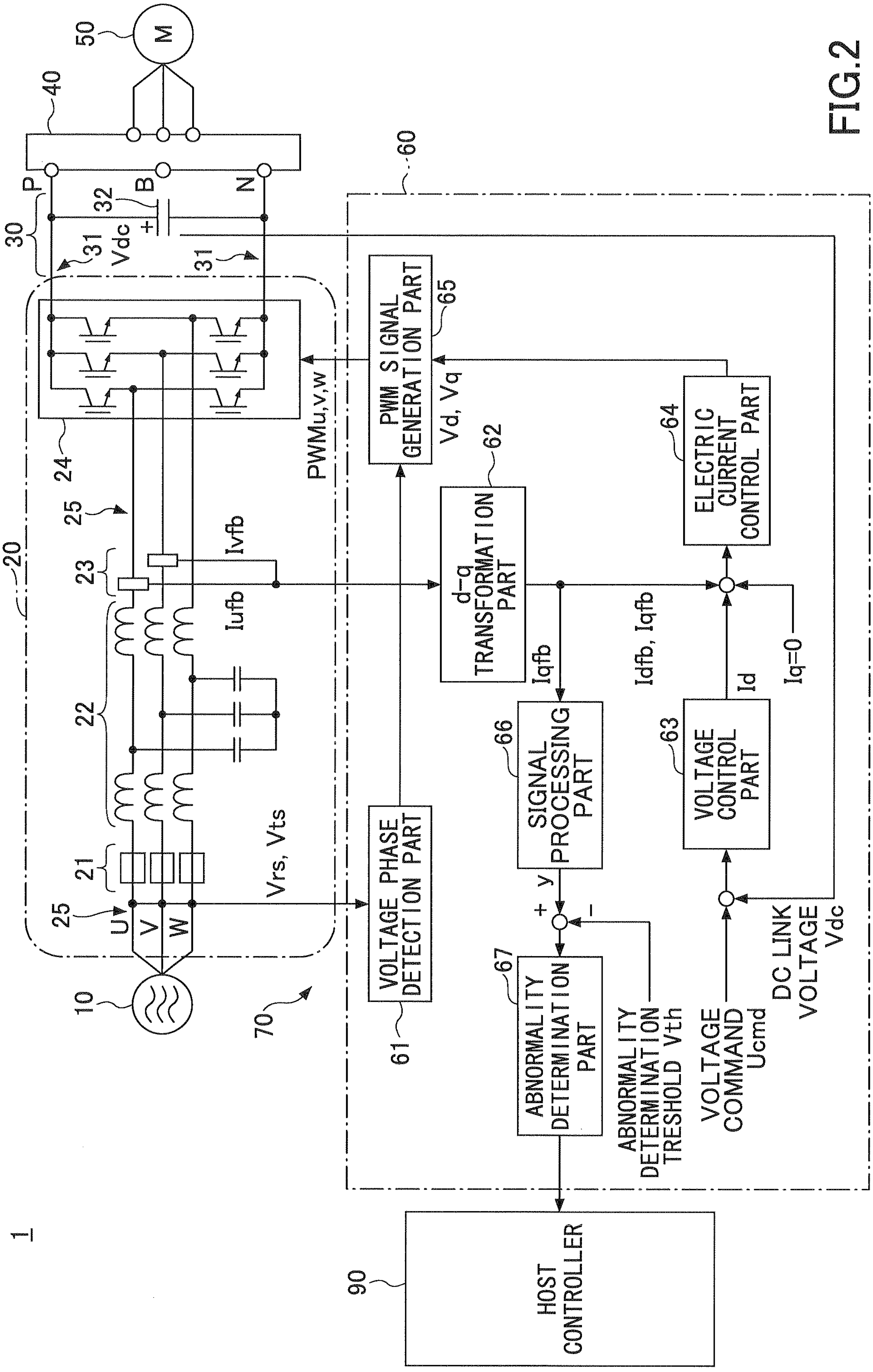
1
10
20
21
22
23
24
25
30
31
32
40
50
M
60
61
62
63
64
65
66
67
70
90
U
V
W
P
B
N
Vdc
Vrs, Vts
Iufb
Ivfb
PWMu,v,w
Vd, Vq
Idfb, Iqfb
Iqfb
Id
Iq=0
y
PWM SIGNAL GENERATION PART
d-q TRANSFORMATION PART
ELECTRIC CURRENT CONTROL PART
VOLTAGE PHASE DETECTION PART
SIGNAL PROCESSING PART
VOLTAGE CONTROL PART
ABNORMALITY DETERMINATION PART
ABNORMALITY DETERMINATION TRESHOLD Vth
VOLTAGE COMMAND Ucmd
DC LINK VOLTAGE Vdc
HOST CONTROLLER

FIG.2

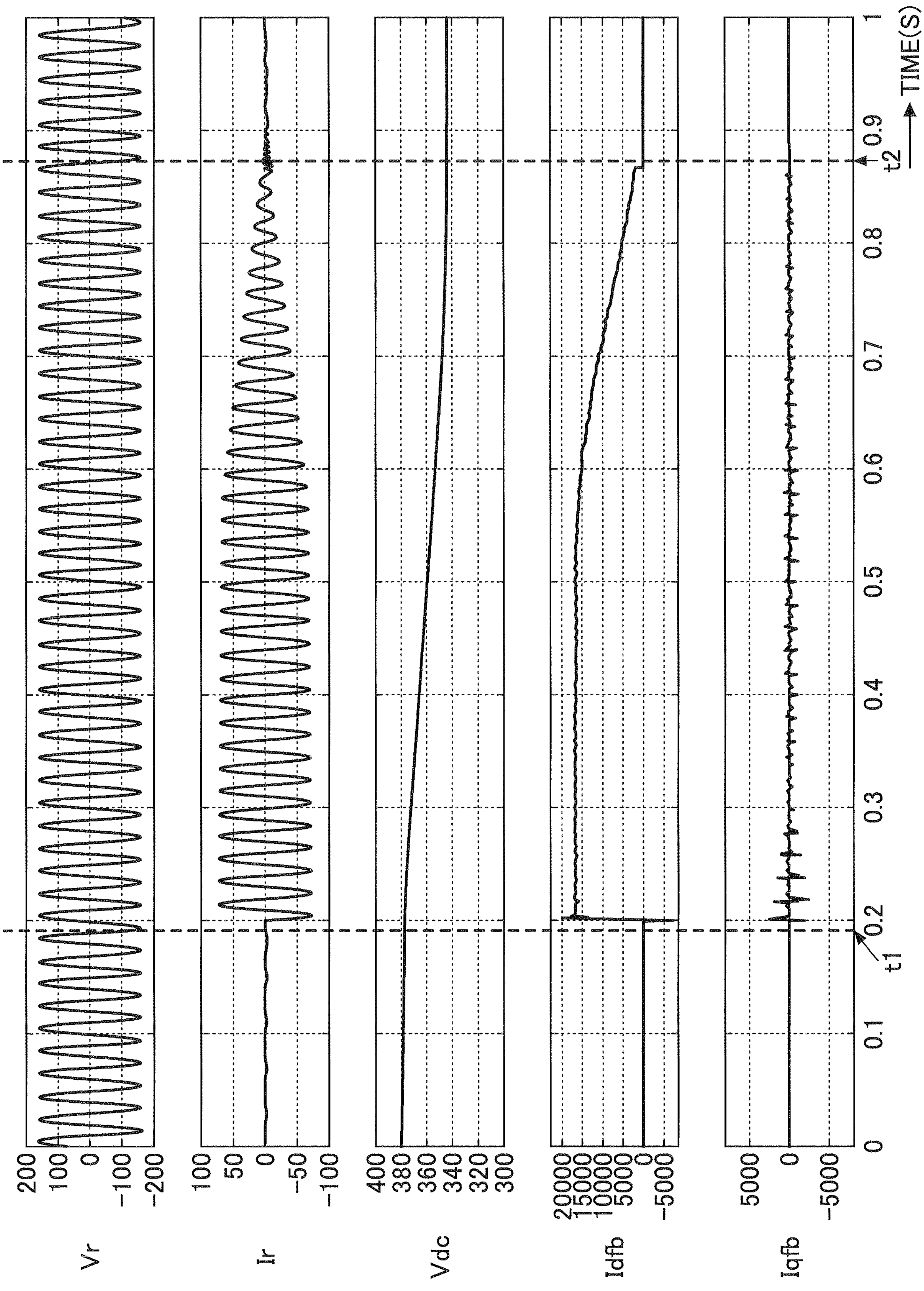
Vr
200
100
0
−100
−200
Ir
100
50
0
−50
−100
Vdc
400
380
360
340
320
300
Idfb
20000
15000
10000
5000
0
−5000
Iqfb
5000
0
−5000
0
0.1
0.2
0.3
0.4
0.5
0.6
0.7
0.8
0.9
1
t1
t2
TIME(S)

FIG.3

FIG.4

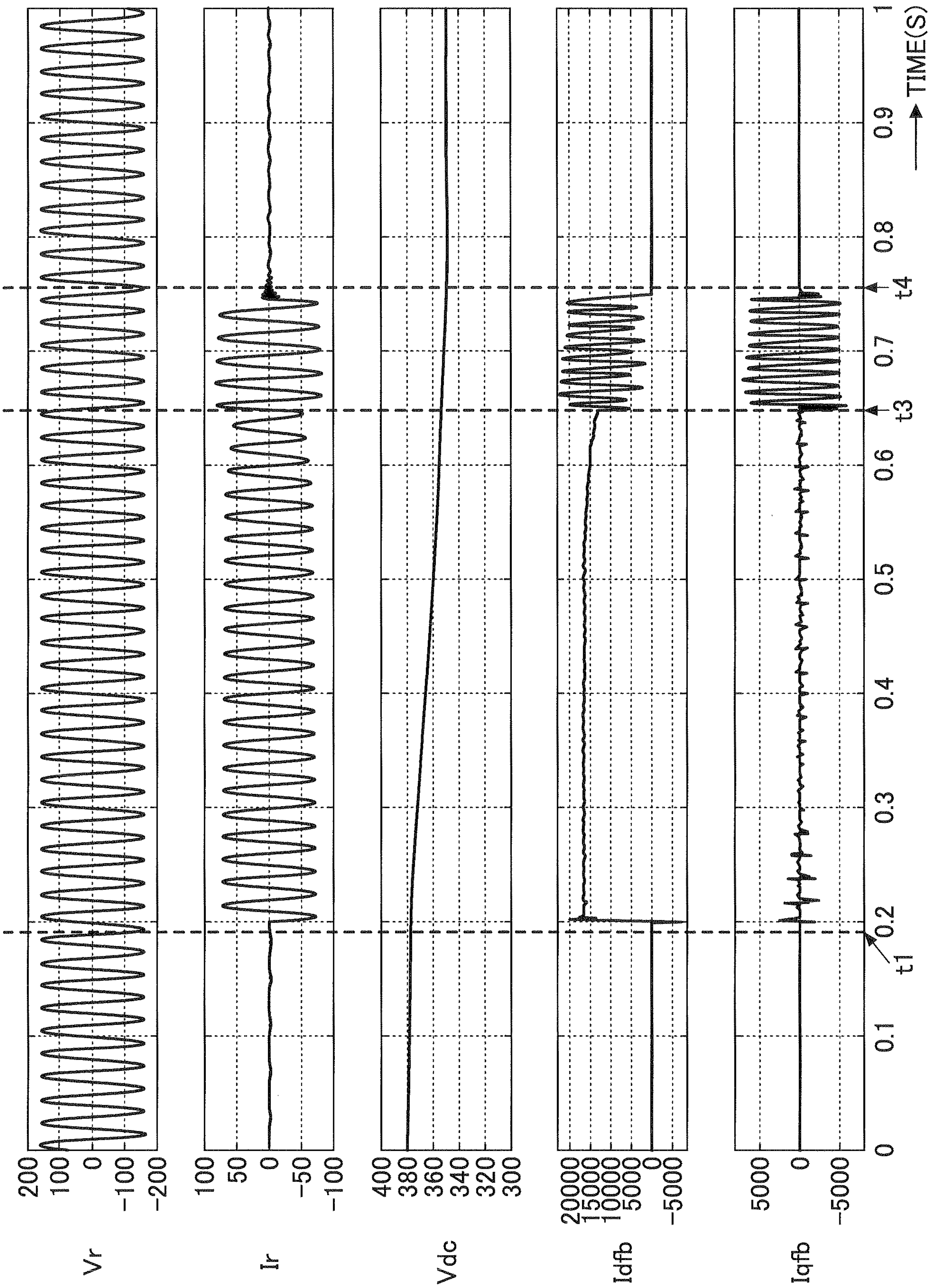
Vr
200
100
0
−100
−200
Ir
100
50
0
−50
−100
Vdc
400
380
360
340
320
300
Idfb
20000
15000
10000
5000
0
−5000
Iqfb
5000
0
−5000
0
0.1
0.2
0.3
0.4
0.5
0.6
0.7
0.8
0.9
1
t1
t3
t4
TIME(S)

FIG.5

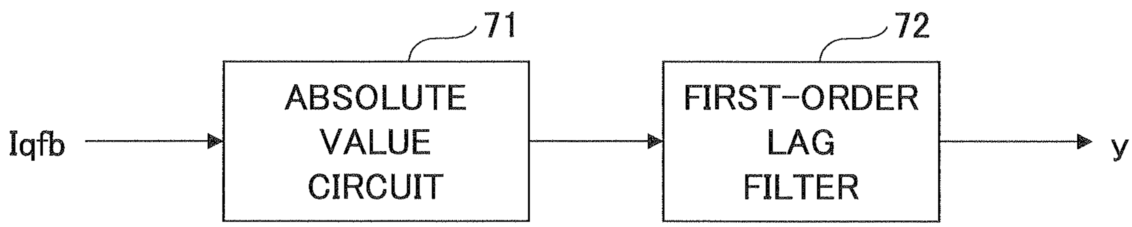

FIG.6

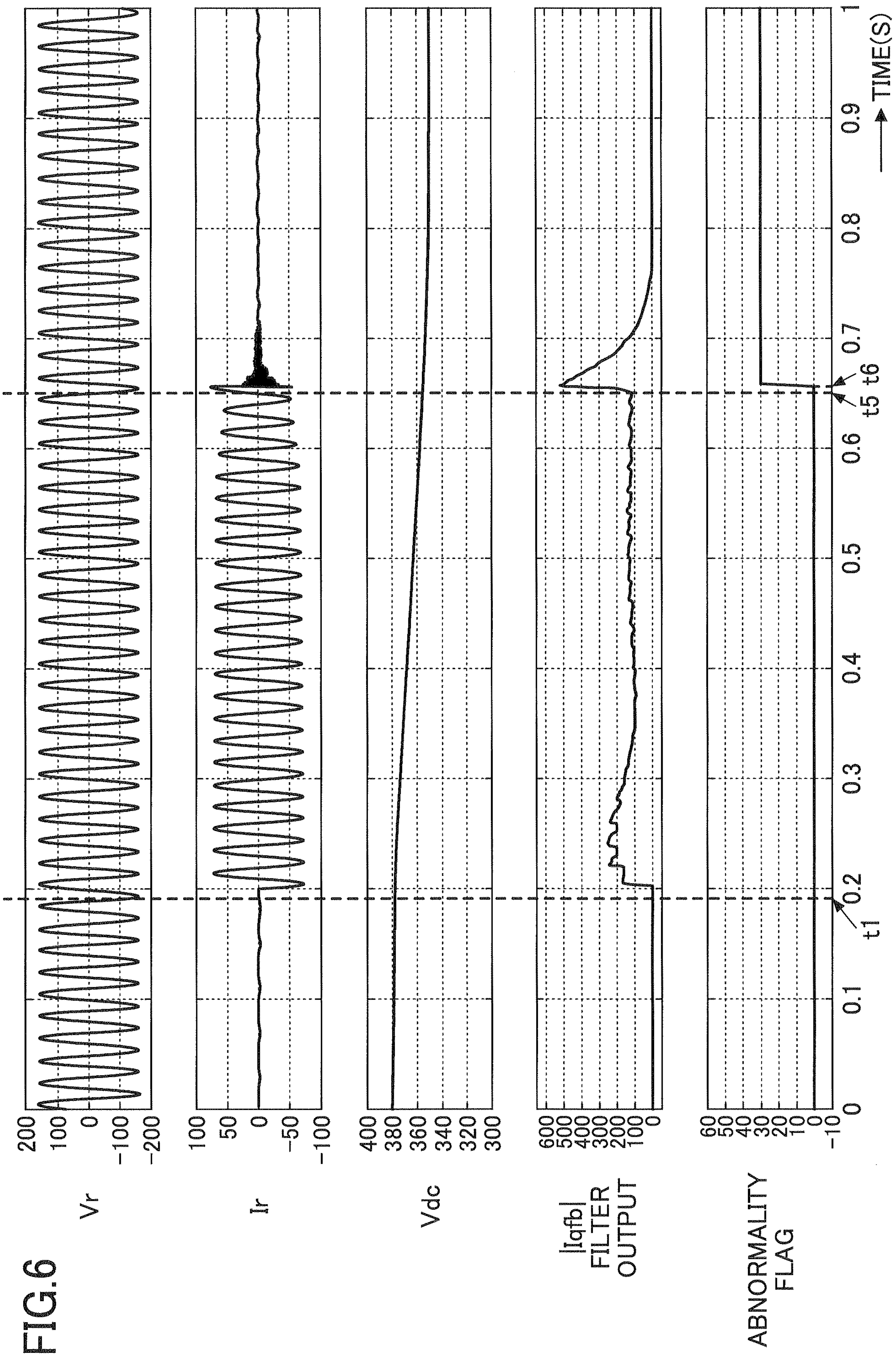
Vr
200
100
0
−100
−200
Ir
100
50
0
−50
−100
Vdc
400
380
360
340
320
300
|Iqfb|
FILTER
OUTPUT
600
500
400
300
200
100
0
ABNORMALITY
FLAG
60
50
40
30
20
10
0
−10
0
0.1
0.2
0.3
0.4
0.5
0.6
0.7
0.8
0.9
1
t1
t5
t6
TIME(S)

FIG.7

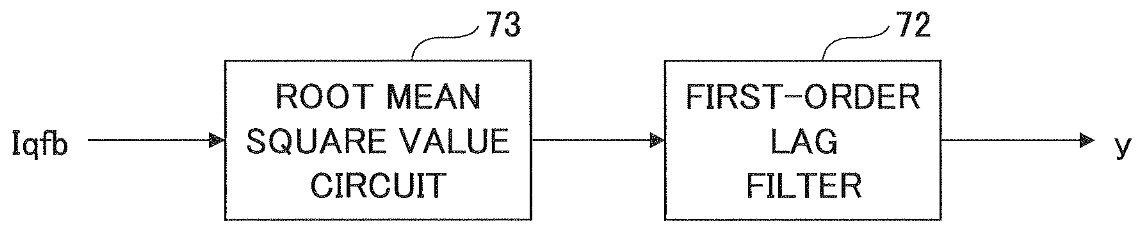
73
72
Iqfb
ROOT MEAN
SQUARE VALUE
CIRCUIT
FIRST-ORDER
LAG
FILTER
y

FIG.8

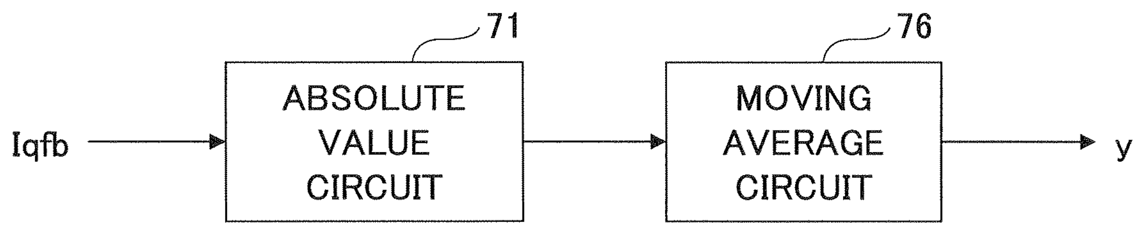
71
76
Iqfb
ABSOLUTE
VALUE
CIRCUIT
MOVING
AVERAGE
CIRCUIT
y

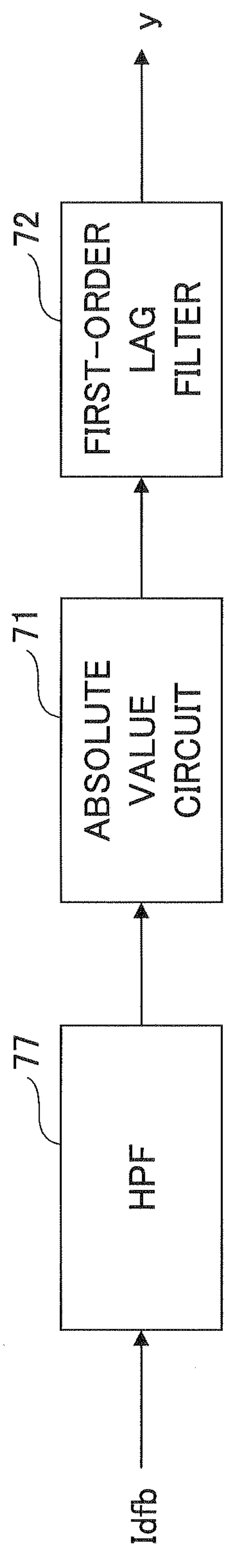
Idfb
HPF
77
ABSOLUTE VALUE CIRCUIT
71
FIRST-ORDER LAG FILTER
72
y

FIG.9

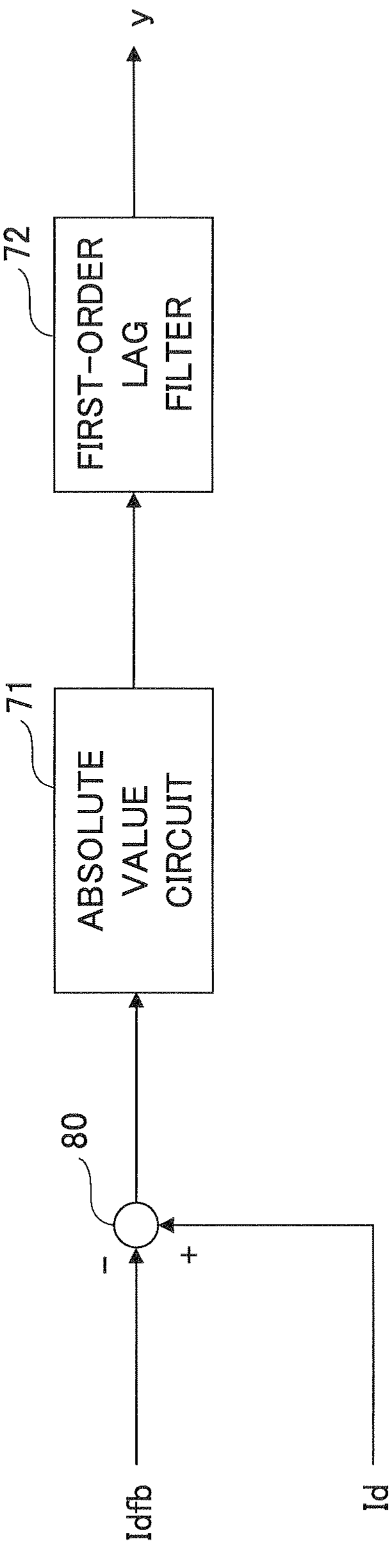
Idfb
Id
−
+
80
ABSOLUTE VALUE CIRCUIT
71
FIRST-ORDER LAG FILTER
72
y

FIG.10

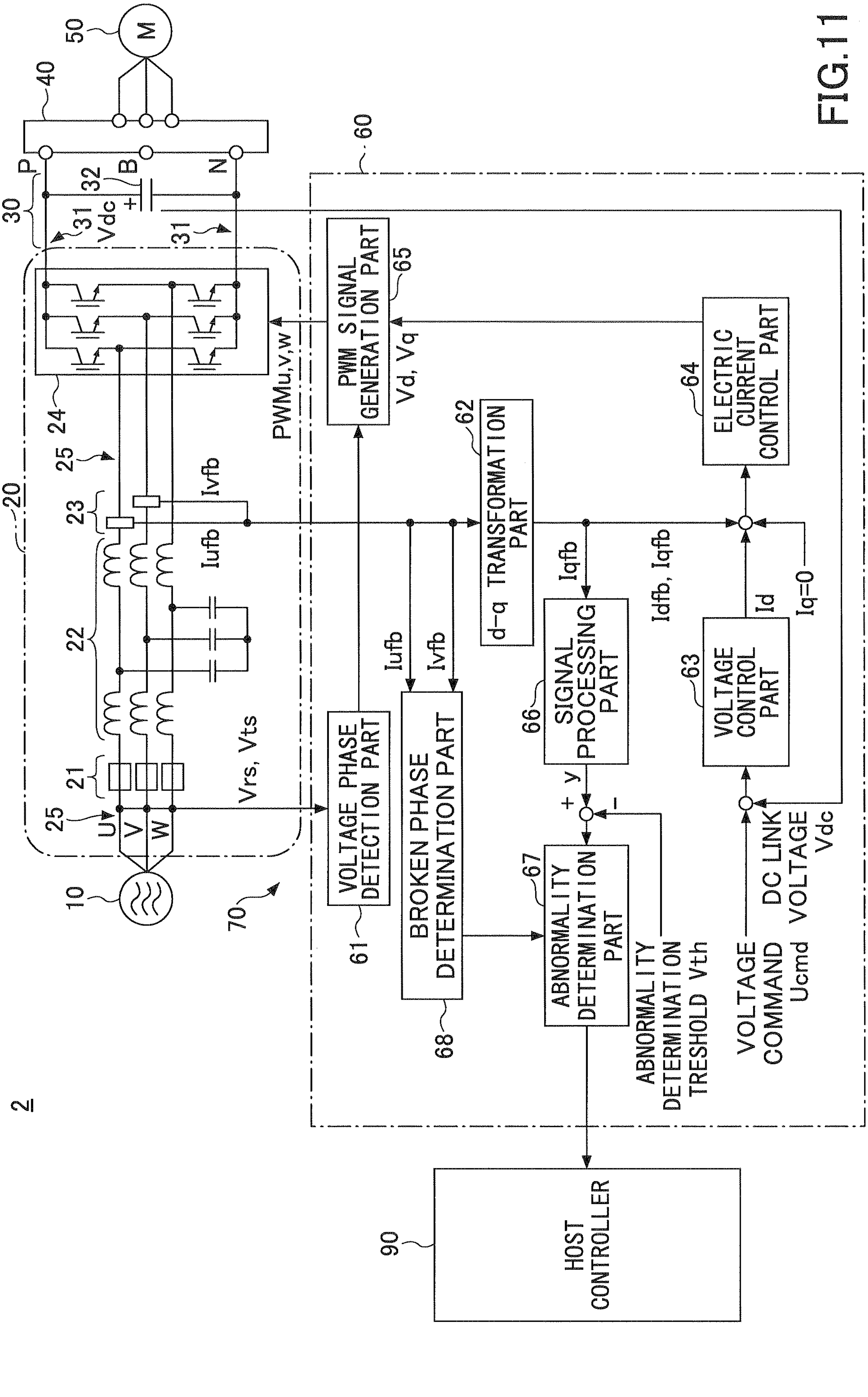
2
10
20
21
22
23
24
25
30
31
32
40
50
M
P
B
N
Vdc
U
V
W
Vrs, Vts
Iufb
Ivfb
PWMu,v,w
70
60
61
VOLTAGE PHASE DETECTION PART
62
d-q TRANSFORMATION PART
63
VOLTAGE CONTROL PART
64
ELECTRIC CURRENT CONTROL PART
65
PWM SIGNAL GENERATION PART
Vd, Vq
66
SIGNAL PROCESSING PART
67
ABNORMALITY DETERMINATION PART
68
BROKEN PHASE DETERMINATION PART
Iqfb
Idfb, Iqfb
Id
Iq=0
y
ABNORMALITY DETERMINATION TRESHOLD Vth
VOLTAGE COMMAND Ucmd
DC LINK VOLTAGE Vdc
90
HOST CONTROLLER

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002166456 A
- EP 2403131 A2
- JP 2010110936 A
- DE 102010000991 A1
- US 6850426 B2
- JP 2006054947 A